# EUROPEAN PATENT APPLICATION

(11) **EP 4 787 814 A1**
(43) Date of publication of application: **05.08.2026**
(21) Application number: 24870740.8
(22) Date of filing: 25.09.2024
(51) Int. Cl.: H04L 65/1016

(54) **INFORMATION ACQUISITION METHOD, APPARATUS, TERMINAL, NETWORK SIDE DEVICE, AND STORAGE MEDIUM**

(30) Priority: 28.09.2023 CN 202311281860
(71) Applicant: Vivo Mobile Communication Co., Ltd., Dongguan, Guangdong 523863 (CN)
(72) Inventor: JIN, Hui, Dongguan, Guangdong 523863 (CN)
(74) Representative: dompatent
(86) International application number: PCT/CN2024/120909
(87) International publication number: WO 2025/067196

(57) **Abstract**

The present application belongs to the technical field of wireless communication and discloses an information acquisition method, an apparatus, a terminal, a network side device, and a storage medium. The information acquisition method comprises : a terminal obtains a first list, the first list comprising at least one data channel application, and the at least one data channel application being a data channel application that can be used when the terminal is in a data service disabled state.

## Description

### CROSS-REFERENCE TO RELATED APPLICATIONS

This application claims priority to Chinese Patent Application No. 202311281860.2 filed in China on September 28, 2023, which is incorporated herein by reference in its entirety.

### TECHNICAL FIELD

This application relates to the field of wireless communication technologies, and specifically, relates to an information obtaining method and apparatus, a terminal, a network-side device, and a storage medium.

### BACKGROUND

The 3rd generation partnership project (3rd Generation Partnership Project, 3GPP) standard introduces a mechanism of establishing a data channel (Data Channel, DC) during a call. An additional service like screen sharing, location sharing, or file transmission may be performed during the call through the DC, to bring better experience to a user. Different services correspond to different data channel applications (DC application, or DC APP for short). The DC APP may be dynamically downloaded to a terminal during a call, and does not need to be installed on the terminal in advance, to facilitate use by the user.

3GPP stipulates that the user can use a DC service only when performing an IP multimedia subsystem (IP Multimedia Subsystem, IMS) voice or video call. Therefore, the DC service is also used as one of exempt services (exempt services) (for example, charged based on use duration or a quantity of use times), that is, no matter which DC APP the user uses during the IMS voice or video call, the DC service is not charged based on traffic. The exempt service is a service that can be used by the terminal in a data service off state.

However, with the research progress, 3GPP removes the limitation that a DC service can only be used in an IMS voice or video call process. In this case, it is inappropriate to continue to process all DC APPs based on an exempt service.

### SUMMARY

Embodiments of this application provide an information obtaining method and apparatus, a terminal, a network-side device, and a storage medium, to resolve a problem in a conventional technology that processing all DC APPs based on an exempt service does not comply with a network transmission situation.

According to a first aspect, an information obtaining method is provided, and includes:
a terminal obtains a first list, where the first list includes at least one data channel application, and the at least one data channel application is a data channel application that can be used by the terminal in a data service off state.

According to a second aspect, an information obtaining method is provided, and includes:
a first IMS network element sends a first list to a terminal, where the first list includes at least one data channel application, and the at least one data channel application is a data channel application that can be used by the terminal in a data service off state.

According to a third aspect, an information obtaining method is provided, and includes:
a second IMS network element sends a first message to a first IMS network element when determining that a terminal is in a data service off state, where the first message includes at least one of the following:
a second list, where the second list includes a data channel application, configured for a PLMN registered with the terminal, that can be used in the data service off state; and
indication information indicating that the terminal is in the data service off state.

According to a fourth aspect, an information obtaining apparatus is provided, and includes:
an obtaining module, used for obtaining a first list, where the first list includes at least one data channel application, and the at least one data channel application is a data channel application that can be used by a terminal in a data service off state.

According to a fifth aspect, an information obtaining apparatus is provided, and includes:
a sending module, used for sending a first list to a terminal, where the first list includes at least one data channel application, and the at least one data channel application is a data channel application that can be used by the terminal in a data service off state.

According to a sixth aspect, an information obtaining apparatus is provided, and includes:
a sending module, used for sending a first message to a first IMS network element when determining that a terminal is in a data service off state, where the first message includes at least one of the following:
a second list, where the second list includes a data channel application, configured for a PLMN registered with the terminal, that can be used in the data service off state; and
indication information indicating that the terminal is in the data service off state.

According to a seventh aspect, a terminal is provided. The terminal includes a processor and a memory. The memory stores a program or instructions runnable on the processor, and when the program or the instructions are executed by the processor, steps of the method according to the first aspect are implemented.

According to an eighth aspect, a terminal is provided, including a processor and a communication interface. The processor is used for obtaining a first list, where the first list includes at least one data channel application, and the at least one data channel application is a data channel application that can be used by the terminal in a data service off state.

According to a ninth aspect, a network-side device is provided. The network-side device includes a processor and a memory. The memory stores a program or instructions runnable on the processor, and when the program or the instructions are executed by the processor, steps of the method according to the second aspect or the third aspect are implemented.

According to a tenth aspect, a network-side device is provided, including a processor and a communication interface. The communication interface is used for sending a first list to a terminal, where the first list includes at least one data channel application, and the at least one data channel application is a data channel application that can be used by the terminal in a data service off state.

According to an eleventh aspect, a network-side device is provided, including a processor and a communication interface. the communication interface is used for sending a first message to a first IMS network element when determining that a terminal is in a data service off state, where the first message includes at least one of the following:
a second list, where the second list includes a data channel application, configured for a PLMN registered with the terminal, that can be used in the data service off state; and
indication information indicating that the terminal is in the data service off state.

According to a twelfth aspect, a readable storage medium is provided. The readable storage medium stores a program or instructions. When the program or the instructions are executed by a processor, steps of the method according to the first aspect, the second aspect, or the third aspect are implemented.

According to a thirteenth aspect, a wireless communication system is provided, including a terminal, a first IMS network element, and a second IMS network element. The terminal may be used for implementing the steps of the information obtaining method according to the first aspect, the first IMS network element may be used for implementing the steps of the information obtaining method according to the second aspect, and the third IMS network element may be used for implementing the steps of the information obtaining method according to the third aspect.

According to a fourteenth aspect, a chip is provided. The chip includes a processor and a communication interface. The communication interface is coupled to the processor. The processor is used for running a program or instructions, to implement the method the method according to the first aspect, the second aspect, or the third aspect.

According to a fifteenth aspect, a computer program/program product is provided. The computer program/program product is stored in a storage medium. The computer program/program product is executed by at least one processor to implement the steps of the method according to the first aspect, the second aspect, or the third aspect.

In this embodiment of this application, not all data channel applications (DC APP) are processed based on an exempt service. The terminal can determine the first list, the first list includes the at least one data channel application, and the at least one data channel application is a data channel application that can be used by the terminal in the data service off state, so that the terminal can optimize use of the data channel application in the data service off state.

### BRIEF DESCRIPTION OF THE DRAWINGS

FIG. 1 is a block diagram of a radio communication system to which an embodiment of this application is applicable;
FIG. 2 is a schematic flowchart of an information obtaining method performed by a terminal according to an embodiment of this application;
FIG. 3 is a schematic flowchart of an information obtaining method performed by a first IMS network element according to an embodiment of this application;
FIG. 4 is a schematic flowchart of an information obtaining method performed by a second IMS network element according to an embodiment of this application;
FIG. 5 is a schematic flowchart of an information obtaining method according to Embodiment 1 of this application;
FIG. 6 is a schematic diagram 1 of a structure of an information obtaining apparatus according to an embodiment of this application;
FIG. 7 is a schematic diagram 2 of a structure of an information obtaining apparatus according to an embodiment of this application;
FIG. 8 is a schematic diagram 3 of a structure of an information obtaining apparatus according to an embodiment of this application;
FIG. 9 is a schematic diagram of a structure of a communication device according to an embodiment of this application;
FIG. 10 is a schematic diagram of a hardware structure of a terminal according to an embodiment of this application; and
FIG. 11 is a schematic diagram of a hardware structure of a network-side device according to an embodiment of this application.

### DESCRIPTION OF EMBODIMENTS

The following clearly describes the technical solutions in embodiments of this application with reference to the accompanying drawings in embodiments of this application. It is clear that the described embodiments are a part rather than all of embodiments of this application. All other embodiments obtained by a person of ordinary skill in the art based on embodiments of this application shall fall within the protection scope of this application.

In this application, the terms "first", "second", and the like are intended to distinguish between similar objects but do not necessarily indicate a specific order or sequence. It should be understood that the terms used in this way are exchangeable in a proper case, so that the embodiments of this application can be implemented in an order different from the order shown or described herein, and objects distinguished by "first" and "second" are usually of a same category and a quantity of the objects is not limited. For example, there may be one or more first objects. In addition, "or" in this application indicates at least one of connected objects. For example, "A or B" covers three solutions. To be specific, a solution 1 including A and excluding B, a solution 2 is including B and excluding A, and a solution 3 is including both A and B. The character "/" in this specification generally indicates an "or" relationship between the associated objects.

The term "indication" in this application may be a direct indication (in other words, an explicit indication) or an indirect indication (in other words, an implicit indication). The direct indication may be understood as that a sending party clearly notifies, in a sent indication, a receiving party of content such as specific information, a to-be-executed operation, or a request result. The indirect indication may be understood as that the receiving party determines corresponding information based on the indication sent by the sending party, or performs determining and determines a to-be-executed operation or a request result based on a determining result.

It should be noted that, the technology described in the embodiments of this application is not limited to a long term evolution (Long Term Evolution, LTE)/LTE-advanced (LTE-Advanced, LTE-A) system, but may be further used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or another system. The terms "system" and "network" in the embodiments of this application are usually interchangeably used, and the technologies described may be applied to the systems and radio technologies mentioned above, and may also be applied to other systems and radio technologies. The following descriptions describe a new radio (New Radio, NR) system for illustration, and NR terms are used in most of the following descriptions, but these technologies can also be applied to a system other than the NR system, such as a 6th generation (6th Generation, 6G) communication system.

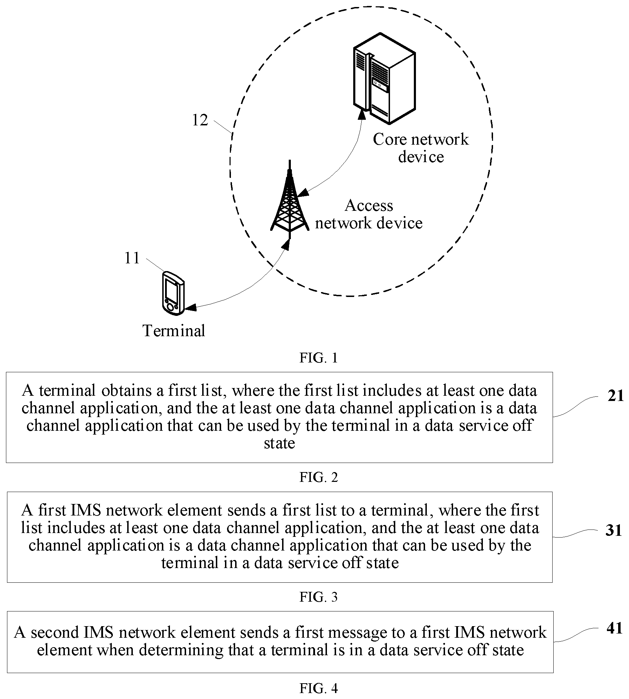

FIG. 1 is a block diagram of a radio communication system to which an embodiment of this application is applicable. The radio communication system includes a terminal 11 and a network-side device 12. The terminal 11 may be a terminal side device like a mobile phone, a tablet computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), augmented reality (Augmented Reality, AR), a virtual reality (Virtual Reality, VR) device, a robot, a wearable device (Wearable Device), a flight vehicle (flight vehicle), vehicle user equipment (Vehicle User Equipment, VUE), an on-ship device, pedestrian user equipment (Pedestrian User Equipment, PUE), a smart home appliance (a home device with a wireless communication function, for example, a refrigerator, a television, a washing machine, or furniture), a game console, a personal computer (Personal Computer, PC), a teller machine, or a self-service machine. The wearable device includes a smart watch, a smart band, a smart headset, smart glasses, smart jewelry (a smart bracelet, a smart hand chain, a smart ring, a smart necklace, a smart bangle, a smart anklet, and the like), a smart wrist strap, a smart dress, and the like. The vehicle user equipment may also be referred to as a vehicle-mounted terminal, a vehicle-mounted controller, a vehicle-mounted module, a vehicle-mounted component, a vehicle-mounted chip, a vehicle-mounted unit, or the like. Besides the above terminal devices, the terminal 11 may alternatively be a chip in a terminal, for example, a modem (Modem) chip or a system on chip (System on Chip, SoC). It should be noted that a specific type of the terminal 11 is not limited in embodiments of this application. The network-side device 12 may include an access network device or a core network device. The access network device may alternatively be referred to as a radio access network (Radio Access Network, RAN) device, a radio access network function, or a radio access network unit. The access network device may include a base station, a wireless local area network (Wireless Local Area Network, WLAN) access point (Access Point, AS), a wireless fidelity (Wireless Fidelity, Wi-Fi) node, or the like. The base station may be referred to as a Node B (Node B, NB), an evolved Node B (Evolved Node B, eNB), a next generation Node B (next generation Node B, gNB), a new radio Node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home Node B (home Node B, HNB), a home evolved Node B (home evolved Node B), a transmission reception point (Transmission Reception Point, TRP) or another suitable term in the field. As long as the same technical effect is achieved, the base station is not limited to a specific technical word. It should be noted that, the base station in the NR system is used only as an example for description in embodiments of this application, but a specific type of the base station is not limited.

An information obtaining method and apparatus, a terminal, a network-side device, and a storage medium provided in embodiments of this application are described below through some embodiments and application scenarios thereof with reference to the accompanying drawings.

The technical content in this application is first briefly described below.

### (1) Data channel (Data Channel, DC) mechanism

The 3rd generation partnership project (3rd Generation Partnership Project, 3GPP) standard introduces a mechanism of establishing a DC during a call. An additional service like screen sharing, location sharing, or file transmission may be performed during the call through the DC, to bring better experience to a user. Different services correspond to different data channel applications (DC application, or DC APP for short). The DC APP may be dynamically downloaded to a terminal during a call, and does not need to be installed on the terminal in advance, to facilitate use by the user.

There are two types of DCs:
bootstrap data channel (Bootstrap DC): used to download a DC APP from a data channel server (for example, a data channel signaling function (data channel signaling function, DCSF); and
application data channel (Application DC): used to transmit data of the DC APP.

### (2) Data service off state and exempt service

After the user turns off a network access switch on a terminal, to avoid a problem of user costs caused by continuing to use a cellular technology (for example, 5G, 4G, or 3G) to perform data transmission, 3GPP defines a 3GPP PS Data Off (3GPP packet switched data off) method.

When the user turns off the network access switch on the terminal (that is, in a 3GPP data service off (e.g. 3GPP PS data off) state), if the terminal currently resides in a 5G network, the terminal carries a PS data off indication in a protocol data unit (Protocol Data Unit, PDU) session establishment or modification request message, so that the 5G network side prevents (prevent) a data transmission request of a service other than a 3GPP packet switched data off exempt service (PS data off exempt service, exempt service for short subsequently). The terminal side may also prevent a data transmission request of a service other than the exempt service.

It should be noted that, the 3GPP date service off (PS data off) state may also be understood as 3GPP data service off is activated (3GPP PS Data Off is activated). For ease of description, the 3GPP data service off state is briefly referred to as a data service off state subsequently.

If the terminal has performed IMS registration, when initiating the IMS registration, the terminal carries a PS data off indication, for example, carries a g.3gpp.ps-data-off media feature tag.

A servicing call session control function (Serving CSCF, S-CSCF) of an IMS network records information about the terminal being in the data service off state, and notifies an IMS application server (application server, AS), and the IMS AS prevents a data transmission request of an IMS service other than the exempt service.

An exempt service list (exempt service list) is configured in the terminal, the 5G network, or the IMS network, and two lists are usually configured. One list is used by user equipment (User Equipment, UE) in a home public land mobile network (Home Public Land Mobile Network, HPLMN), and the other list is used by the UE in a visited public land mobile network (Visited Public Land Mobile Network, VPLMN).

The exempt service is a service that can still be used by the terminal in the data service off state.

In the conventional technology, 3GPP stipulates that the user can use a DC service only when performing an IMS voice or video call, and all DC APPs are processed based on the exempt service (for example, charged based on use duration or a quantity of use times). With the research progress, 3GPP removes the limitation that a DC service can only be used in an IMS voice or video call process. In this case, it is inappropriate to continue to process all DC APPs based on an exempt service.

For example, a DC APP used for file transmission between two communication parties is more suitable for charging based on used data traffic. A reason is that transmission duration is affected by factors such as a size of a file transmitted in a single time and quality of a network signal of the terminal. Therefore, charging based on use duration (when a same file is transmitted, if signal quality is inconsistent, the use duration is also inconsistent) and a quantity of use times (for example, transmission of a 1T movie and transmission of a 2M photo are one price) is unreasonable, and does not comply with a network transmission situation.

To resolve the foregoing problem, as shown in FIG. 2, an embodiment of this application provides an information obtaining method, including the following steps.

Step 21: A terminal obtains a first list, where the first list includes at least one data channel application, and the at least one data channel application is a data channel application that can be used by the terminal in a data service off state.

In this embodiment of this application, the data service off state may also be explained as 3GPP PS Data Off is activated. The data channel application that can be used by the terminal in the data service off state may also be explained as an exempt service (3GPP PS data off exempt service) that can be used by the terminal.

In this embodiment of this application, not all data channel applications (DC APP) are processed based on an exempt service. The terminal can determine the first list, the first list includes the at least one data channel application, and the at least one data channel application is a data channel application that can be used by the terminal in the data service off state, so that the terminal can optimize use of the data channel application in the data service off state.

In some embodiments, optionally, that the terminal obtains a first list includes: The terminal receives the first list sent by a first IMS network element. In other words, the first list may be determined by the first IMS network element, and sent to the terminal.

In some embodiments, optionally, the first IMS network element may be a data channel signaling function (data channel signaling function, DCSF), and certainly is not excluded from being another IMS network element.

Optionally, that the terminal receives the first list sent by a first IMS network element includes: The terminal sends a first request to the first IMS network element, where the first request is used to request the first list.

Optionally, that the terminal sends a first request to the first IMS network element includes:
the terminal sends the first request to the first IMS network element in the data service off state; or
the terminal sends the first request to the first IMS network element in a case that the terminal changes to the data service off state.

In this embodiment of this application, optionally, the first request is a hypertext transfer protocol get request (HTTP GET Request). The HTTP GET request carries a root (root) uniform resource locator (Uniform Resource Locator, URL).

In some embodiments, optionally, that the terminal obtains a first list includes:
the terminal obtains a second list and a third list, where the second list includes a data channel application, configured for a PLMN registered with the terminal, that can be used in the data service off state, and the third list includes all data channel applications that can be used by the terminal; and
the terminal determines the first list based on the second list and the third list.

Optionally, the first list is an intersection of the second list and the third list.

Optionally, that the second list includes a data channel application, configured for a PLMN registered with the terminal, that can be used in the data service off state may be understood as that the second list includes a list of all data channel applications that can be used in the data service off state. The second list may be a list of data channel applications, configured for the PLMN registered with the terminal, that can be used in the data service off state. The data channel applications included in the second list may include a data channel application that can be used by the terminal, and may include a data channel application that cannot be used by the terminal.

Optionally, the third list includes all the data channel applications that can be used by the terminal. The third list may be a list generated by the first IMS network element based on information such as a subscription and a capability of the terminal.

In other words, in this embodiment, the first list is determined by the terminal.

In this embodiment of this application, the data channel applications are further subdivided. Optionally, a data channel application for which charging is not performed based on traffic is used as an exempt service for processing, and is configured in the second list, and another data channel application is used as a non-exempt service for processing.

Optionally, a 3GPP packet switched data off exempt service configured for the PLMN registered with the terminal includes the second list, or the second list is a list independent of the 3GPP packet switched data off exempt service.

Optionally, each data channel application in the second list is indicated in at least one of the following manners:
an identifier (ID) of the data channel application;
a type of the data channel application, for example, an instant messaging type and a file transmission type; and
a purpose of the data channel application, for example, locating, screen sharing, and file transmission.

Optionally, that the terminal obtains the second list includes at least one the following:
the terminal obtains the locally stored second list;
the terminal obtains the second list through a device management (Device Management) process;
the terminal obtains the second list through a universal integrated circuit card (Universal Integrated Circuit Card, UICC) provisioning (UICC provisioning) process; and
the terminal obtains the second list in an IMS registration process.

In an existing device management process, UICC provisioning process, and IMS registration process, the terminal may obtain a 3GPP PS data off exempt service. In this embodiment of this application, the process of obtaining the second list is the same as the process of obtaining the 3GPP PS data off exempt service.

Optionally, that the terminal obtains the third list includes: The terminal obtains the third list from the first IMS network element.

Optionally, that the terminal determines the first list based on the second list and the third list includes:
if the terminal is in the data service off state when obtaining the third list, the terminal determines the first list based on the second list and the third list; or
if the terminal is not in the data service off state when obtaining the third list, the terminal determines the first list based on the second list and the third list after being changed to the data service off state.

In the first case (if the terminal is in the data service off state when obtaining the third list), the terminal may first be in the data service off state, then establish a bootstrap data channel (bootstrap DC), and obtain the third list from the first IMS network element. In this case, once obtaining the third list, the terminal determines the first list based on the second list and the third list.

In the second case (if the terminal is not in the data service off state when obtaining the third list), the terminal may first establish a bootstrap data channel (bootstrap DC), obtain the third list from the first IMS network element, and then change to the data service off state. In this case, after obtaining the third list, the terminal may not immediately determine the first list based on the second list and the third list, but determines the first list based on the second list and the third list until the terminal changes to the data service off state.

In this embodiment of this application, optionally, the information obtaining method further includes: In the case that the terminal is in the data service off state, if it is determined that a first data channel application is using an application data channel (Application DC), and the first data channel application is not included in the first list, the terminal initiates a procedure of deleting the application data channel corresponding to the first data channel application.

Optionally, the terminal may indicate, by sending a second request, to delete the application data channel corresponding to the first data channel application. Optionally, the second request may be a re-invite (re-Invite) message.

Optionally, deleting the application data channel corresponding to the first data channel application may be indicated by indicating to set a port number corresponding to the application data channel corresponding to the first data channel application to 0.

Optionally, that the first data channel application is not included in the first list may be understood as that the first data channel application does not belong to the first list, or the first list does not include a data channel application that is the same as the first data channel application.

According to this embodiment of this application, a problem of how to determine whether an application data channel can be further used when the terminal is in the data service off state can be resolved. Specifically, if there is a data channel service (namely, an exempt service) that can be used by the terminal in the data service off state, an application data channel can be further used to transmit data. If there is a data channel service (a non-exempt service or a data channel service that cannot be used by the terminal) that cannot be used by the terminal in the data service off state, a corresponding application data channel is deleted.

Optionally, that the terminal initiates a procedure of deleting the application data channel corresponding to the first data channel application includes: The terminal sends the second request, where the second request indicates to delete the application data channel.

In this embodiment of this application, optionally, after obtaining the first list, the terminal may further display the first list, to present, to a user, a data channel application that can be further used.

As shown in FIG. 3, an embodiment of this application further provides an information obtaining method, including the following steps.

Step 31: A first IMS network element sends a first list to a terminal, where the first list includes at least one data channel application, and the at least one data channel application is a data channel application that can be used by the terminal in a data service off state.

In this embodiment of this application, optionally, the first IMS network element may be a DCSF, and certainly is not excluded from being another IMS network element.

In this embodiment of this application, the first IMS network element can determine the first list, and send the first list to the terminal, the first list includes the at least one data channel application, and the at least one data channel application is a data channel application that can be used by the terminal in the data service off state, so that the terminal can optimize use of the data channel application in the data service off state.

In this embodiment of this application, optionally, that a first IMS network element sends a first list to a terminal includes:
the first IMS network element receives a first request sent by the terminal, where the first request is used to request the first list; and
the first IMS network element sends the first list to the terminal.

In this embodiment of this application, further optionally, the first IMS network element sends the first list to the terminal when the terminal is in the data service off state and receives the first request.

In this embodiment of this application, optionally, the information obtaining method further includes:
the first IMS network element obtains a second list and a third list, where the second list includes a data channel application, configured for a PLMN registered with the terminal, that can be used in the data service off state, and the third list includes all data channel applications that can be used by the terminal; and
the first IMS network element determines the first list based on the second list and the third list.

Optionally, the first list is an intersection of the second list and the third list.

Optionally, that the second list includes a data channel application, configured for a PLMN registered with the terminal, that can be used in the data service off state may be understood as that the second list includes a list of all data channel applications that can be used in the data service off state. The second list may be a list of data channel applications, in the PLMN registered with the terminal, that can be used in the data service off state.

Optionally, that the third list includes all data channel applications that can be used by the terminal may be understood as that the third list includes a list of all the data channel applications that can be used by the terminal. The third list may be a list generated by the first IMS network element based on information such as a subscription and a capability of the terminal.

In this embodiment of this application, optionally, the information obtaining method further includes: The first IMS network element receives a first message sent by a second IMS network element, where the first message includes at least one of the following:
the second list; and
indication information indicating that the terminal is in the data service off state.

In this embodiment of this application, if the first IMS network element stores the second list, the first message sent by the second IMS network element may not include the second list, and only include indication information indicating that the terminal is in the data service off state. Certainly, the first message may also include the second list.

If the first IMS network element does not store the second list, the first message sent by the second IMS network element needs to include the second list. When the first IMS network element receives the second list, it may be considered that the terminal is in the data service off state. Certainly, the first message may also include the indication information indicating that the terminal is in the data service off state.

In this embodiment of this application, optionally, the second IMS network element may be an IMS application server (Application Server, AS), and certainly is not excluded from being another IMS network element.

In this embodiment of this application, optionally, the first message may be a notify message, for example, a Nimsas_SessionEventControl_Notify message, used to notify the first IMS network element to establish a bootstrap data channel.

In this embodiment of this application, the data channel applications are further subdivided. Optionally, a data channel application for which charging is not performed based on traffic is used as an exempt service for processing, and is configured in the second list, and another data channel application is used as a non-exempt service for processing.

Optionally, a 3GPP packet switched data off exempt service configured for the PLMN registered with the terminal includes the second list, or the second list is a list independent of the 3GPP packet switched data off exempt service.

Optionally, each data channel application in the second list is indicated in at least one of the following manners:
an identifier (ID) of the data channel application;
a type of the data channel application, for example, an instant messaging type and a file transmission type; and
a purpose of the data channel application, for example, locating, screen sharing, and file transmission.

As shown in FIG. 4, an embodiment of this application further provides an information obtaining method, including the following steps.

Step 41: A second IMS network element sends a first message to a first IMS network element when determining that a terminal is in a data service off state, where the first message includes at least one of the following:
a second list, where the second list includes a data channel application, configured for a PLMN registered with the terminal, that can be used in the data service off state; and
indication information indicating that the terminal is in the data service off state.

In this embodiment of this application, optionally, the second list is used to determine a first list, the first list includes at least one data channel application, and the at least one data channel application is a data channel application that can be used by the terminal in the data service off state.

In this embodiment of this application, when determining that the terminal is in the service off state, the second IMS network element may send the second list to the first IMS network element, and the first IMS network element determines the first list based on the second list. In addition, the first message may include only the second list. In a case of receiving the second list, the first IMS network element considers that the terminal is in the data service off state, and further determines the first list. Certainly, the first message may also include the indication information.

When determining that the terminal is in the service off state, the first message sent by the second IMS network element may alternatively include only the indication information. In this case, the first IMS network element usually has stored the second list. In this case, the second IMS network element does not need to send the second list. Certainly, the second IMS network element may alternatively send the second list.

In this embodiment of this application, optionally, the second IMS network element may be an IMS AS.

In this embodiment of this application, optionally, the first IMS network element may be a DCSF.

In this embodiment of this application, optionally, the first message may be a notify message, for example, a Nimsas_SessionEventControl_Notify message, used to notify the first IMS network element to establish a bootstrap data channel.

In this embodiment of this application, the data channel applications are further subdivided. Optionally, a data channel application for which charging is not performed based on traffic is used as an exempt service for processing, and is configured in the second list, and another data channel application is used as a non-exempt service for processing.

Optionally, that the second list includes a data channel application, configured for a PLMN registered with the terminal, that can be used in the data service off state may be understood as that the second list includes a list of all data channel applications that can be used in the data service off state. The second list may be a list of data channel applications, in the PLMN registered with the terminal, that can be used in the data service off state.

Optionally, a 3GPP packet switched data off exempt service configured for the PLMN registered with the terminal includes the second list, or the second list is a list independent of the 3GPP packet switched data off exempt service.

Optionally, each data channel application in the second list is indicated in at least one of the following manners:
an identifier (ID) of the data channel application;
a type of the data channel application, for example, an instant messaging type and a file transmission type; and
a purpose of the data channel application, for example, locating, screen sharing, and file transmission.

In this embodiment of this application, optionally, that a second IMS network element sends a first message to a first IMS network element when determining that a terminal is in a data service off state includes:
in a case of receiving a bootstrap data channel establishment request sent by the terminal and determining that the terminal is in the data service off state, the second IMS network element sends the first message to the first IMS network element; or
the second IMS network element sends the first message to the first IMS network element in a case that the terminal changes to the data service off state.

The following describes the information obtaining method in embodiments of this application by using examples with reference to specific application scenarios.

### Embodiment 1 of this application:

In this embodiment, a terminal (UE) is first in a data service off state, and then establishes a bootstrap data channel (bootstrap DC).

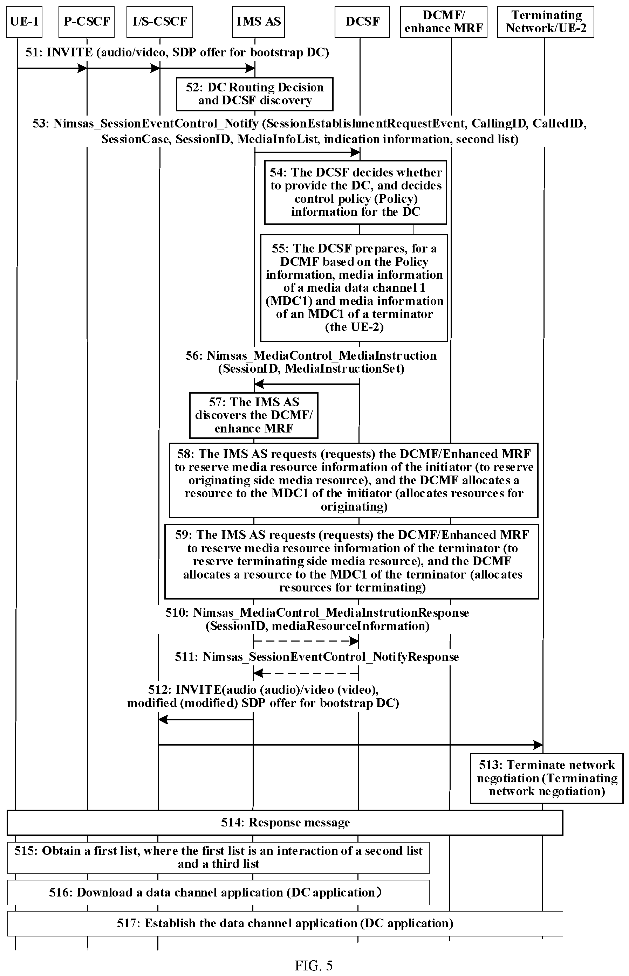

As shown in FIG. 5, the information obtaining method according to embodiments of this application includes the following steps (each IMS network element in FIG. 5 is a network element providing a service for UE-1).

Step 51: The UE-1 initiates a call request to UE-2 by using a session initiation protocol (Session Initiation Protocol, SIP) invite (invite) message, and adds a session description protocol (Session Description Protocol, SDP) offer to the SIP invite message, where the SDP offer is used for describing media description information corresponding to a current call.

The SDP offset includes description information of an audio/video (audio/video) and description information of establishing a Bootstrap DC.

In some embodiments, description information of the Bootstrap DC may be as follows:
m=application 52718 UDP/DTLS/SCTP webrtc-datachannel
b=AS:500
a=max-message-size:1024
a=sctp-port:5000
a=dcmap:0 subprotocol="http"

The row m indicates that a media type is a data channel.

The row b indicates that a bandwidth corresponding to the data channel is 500 kbps.

The row a indicates attribute information of the data channel:
a=max-message-size:1024 indicates that a maximum value of a message that can be transmitted on the data channel is 1024 bytes;
a=sctp-port:5000 indicates that a port number corresponding to the data channel is 5000.
a=dcmap:0 subprotocol="http" indicates that an APP corresponding to the bootstrap DC is provided by a network operator of the UE-1;
a=dcmap:10 subprotocol="http" indicates that the APP corresponding to the bootstrap DC is provided by the UE-1;
a=dcmap:100 subprotocol="http" indicates that an APP corresponding to the bootstrap DC is provided by a network operator of the UE-2; and
a=dcmap:110 subprotocol="http" indicates that the APP corresponding to the bootstrap DC is provided by the UE-2.

Herein, 0, 10, 100, and 110 in the row a are stream IDs. The stream ID is used to identify a DC, usually 0 to 999 are used to identify bootstrap DCs, and 1000 or more is used to identify application DCs.

The invite message passes through a proxy call session control function (Proxy CSCF, P-CSCF) and a servicing call session control function (Serving CSCF, S-CSCF) that provide services to the UE-1, and is finally routed to an IMS AS like a telephony application server (Telephony Application Server, TAS) that provides a service to the UE-1.

Step 52: The IMS AS performs authentication on the UE-1 based on a subscription of the user, and if the UE-1 can use a DC service, the IMS AS selects a DCSF (DC Routing Decision and DCSF discovery).

Step 53: When determining that the UE-1 is in a data service off state, the IMS AS sends a Nimsas_SessionEventControl_Notify message to the DCSF, where the message is used to notify the DCSF to establish the Bootstrap DC.

The Nimsas_SessionEventControl_Notify message is equivalent to the first message in the foregoing embodiment, and the Nimsas_SessionEventControl_Notify includes at least one of the following:
a second list, where the second list includes a data channel application, configured for a PLMN registered with the terminal, that can be used in the data service off state, namely, a data channel application list of an exempt service; and
indication information (data off indication) indicating that the terminal is in the data service off state.

If the Nimsas_SessionEventControl_Notify message already includes the second list, the foregoing indication information may not be included. The second list is sent, to implicitly indicate that the terminal is in the data service off state.

The Nimsas_SessionEventControl_Notify message may further include at least one piece of the following information:
an event identifier (Event ID): For example, when the bootstrap DC is established, the Event ID is SessionEstablishmentRequestEvent;
a calling party ID (CallingID): namely, an ID of the UE-1, for example, an IMS public identity (IMS Public Identity, IMPU) of the UE-1;
a called party ID (CalledID): namely, an ID of the UE-2, for example, an IMPU of the UE-2;
SessionCase: indicating whether a session (session) is triggered by the calling party or a session triggered by the called party;
SessionID: session identifier; and
MediaInfoList: a media information list, where each piece of media information includes a media identifier (Media id) and media attribute information, for example, Media Info corresponding to the Bootstrap DC, or MediaInfo corresponding to the Application DC.

Step 54: The DCSF decides whether to provide the DC, and decides control policy (Policy) information for the DC.

Step 55: The DCSF prepares, for a data channel media function (Data Channel Media Function, DCMF) based on the Policy information, media information of a media data channel 1 (MDC1) of an initiator (the UE-1) and media information of an MDC1 of a terminator (the UE-2).

The media data channel (Media Data Channel, MDC) 1 is an interface between a DCMF/enhanced multimedia resource function (Multimedia Resource Function, MRF) and the DCSF, and is used to transmit media data between the DCSF and the DCMF/enhanced MRF, for example, transmit an APP installation package, an APP list, or a graphical user interface (graphical user interface).

Step 56: The DCSF sends a Nimsas_MediaControl_MediaInstruction message to the IMS AS, to indicate the IMS AS to establish a connection to the DCMF for both communication parties. The message includes uniform resource locator (Uniform Resource Locator, URL) information corresponding to the UE-1.

The Nimsas_MediaControl_MediaInstruction message includes:
session identifier (SessionID): the same as the SessionID in step 53; and
MediaInstructionSet, including:
   mediaID: used to uniquely identify one media, and the same as the mediaID in step 53; and
   mediaInstruction: indicating how the IMS AS processes the media, for example, connects (connect) to the DCMF or disconnects (disconnect) to the DCMF.

Step 57: The IMS AS discovers the DCMF/enhanced MRF.

Steps 58 and 59: The IMS AS sends an Ndcmf_MediaResourceManagement_Create message to the DCMF based on the indication (MediaInstructionSet) of the DCSF in step 56, where the message includes information about a media resource reserved for the calling party, information about a media resource reserved for a called party, and URL information corresponding to the UE-1.

In this embodiment of this application, step 58 and step 59 may alternatively be performed in a same step.

Step 510: In response to the message in step 56, the IMS AS sends a message to the DCSF, to indicate whether the media resource is successfully reserved.

Step 511: The DCSF responds to the message in step 53.

Step 512: The IMS AS modifies content of an SDP sent to the UE-2, and adds the media information of the DCMF or the enhanced MRF.

Step 513: The UE-2 side network performs processing.

Step 514: The UE-2 replies with a response message, to complete establishment of the data channel.

Step 515: The UE-1 obtains the first list from the DCSF, where the first list includes at least one DC APP, and the at least one DC APP is a data channel application that can be used by the terminal in the data service off state. The first list is determined by the DCSF based on the second list and the third list. The third list includes all DC APPs that can be used by the terminal.

Step 516: The UE-1 may select one DC APP from the APP list for downloading.

Step 517: After downloading the DC APP, the UE-1 establishes an application DC corresponding to the DC APP.

Embodiment 2 of this application:
In this embodiment, a terminal (UE) first establishes a bootstrap data channel (bootstrap DC), and then changes to a data service off state.

In this embodiment:
when determining that the UE is changed to the data service off state, an IMS AS sends a notify (notify) message to the DCSF, where the notify message is equivalent to the first message in the foregoing embodiment, and the notify message includes at least one of the following:
a second list, where the second list includes a data channel application, configured for a PLMN registered with the terminal, that can be used in the data service off state, namely, a data channel application list of an exempt service; and
indication information (data off indication) indicating that the terminal is in the data service off state.

If the notify message already includes the second list, the foregoing indication information may not be included. The second list is sent, to implicitly indicate that the terminal is in the data service off state.

The DCSF determines the first list based on the second list and the third list, and sends the first list to the UE. The third list includes all DC APPs that can be used by the terminal.

When determining to change to the data service off state, the UE performs step 515, to reobtain the first list.

When the UE determines to change to the data service off state, if it is determined that a first data channel application is using an application data channel (Application DC), and the first data channel application is not included in the first list, the terminal initiates a procedure of deleting the application data channel corresponding to the first data channel application.

Optionally, the terminal may indicate, by sending re-Invite, to delete the application data channel corresponding to the first data channel application. The re-Invite is similar to the Invite message in Embodiment 1. A difference lies in that the re-Invite message may carry indication information for indicating to delete the application data channel corresponding to the first data channel application.

Optionally, deleting the application data channel corresponding to the first data channel application may be indicated by indicating to set a port number corresponding to the application data channel corresponding to the first data channel application to 0.

Embodiment 3 of this application:
In Embodiment 1 and Embodiment 2, the DCSF determines the first list. However, in this embodiment, the UE determines the first list based on the second list and the third list.

That the terminal obtains the second list includes at least one the following:
the terminal obtains the locally stored second list;
the terminal obtains the second list through a device management process;
the terminal obtains the second list through a UICC provisioning process; and
the terminal obtains the second list in an IMS registration process.

In some embodiments, the terminal is first in the data service off state, then establishes a bootstrap data channel (bootstrap DC), and obtains the third list from the first IMS network element. In this case, once obtaining the third list, the terminal determines the first list based on the second list and the third list.

In some embodiments, the terminal first establishes a bootstrap data channel (bootstrap DC), obtains the third list from the first IMS network element, and then changes to the data service off state. In this case, after obtaining the third list, the terminal may not immediately determine the first list based on the second list and the third list, but determines the first list based on the second list and the third list until the terminal changes to the data service off state.

In this embodiment, after obtaining the first list, the UE may present the first list to the user, so that the user learns of a DC APP that can be used in the data service off state.

When it is determined that the UE is in the data service off state, if it is determined that a first data channel application is using an application data channel (Application DC), and the first data channel application is not included in the first list, the terminal initiates a procedure of deleting the application data channel corresponding to the first data channel application.

Optionally, the terminal may indicate, by sending re-Invite, to delete the application data channel corresponding to the first data channel application. The re-Invite is similar to the Invite message in Embodiment 1. A difference lies in that the re-Invite message may carry indication information for indicating to delete the application data channel corresponding to the first data channel application.

Optionally, deleting the application data channel corresponding to the first data channel application may be indicated by indicating to set a port number corresponding to the application data channel corresponding to the first data channel application to 0.

The information obtaining method provided in embodiments of this application may be performed by an information obtaining apparatus. In embodiments of this application, the information obtaining apparatus provided in embodiments of this application is described by using an example in which the information obtaining apparatus performs the information obtaining method.

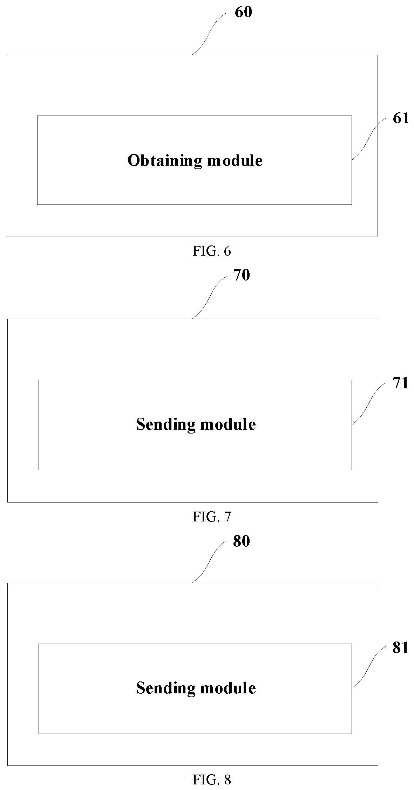

As shown in FIG. 6, an embodiment of this application further provides an information obtaining apparatus 60, including:
an obtaining module 61, used for obtaining a first list, where the first list includes at least one data channel application, and the at least one data channel application is a data channel application that can be used by a terminal in a data service off state.

In this embodiment of this application, the first list can be determined, the first list includes the at least one data channel application, and the at least one data channel application is a data channel application that can be used by the terminal in the data service off state, so that the terminal can optimize use of the data channel application in the data service off state.

Optionally, the obtaining module 61 is used for receiving the first list sent by a first IMS network element.

Optionally, the obtaining module 61 is used for sending a first request to the first IMS network element, where the first request is used to request the first list.

Optionally, the obtaining module 61 is used for sending the first request to the first IMS network element in the data service off state; or
optionally, the obtaining module 61 is used for sending the first request to the first IMS network element in a case that the terminal changes to the data service off state.

Optionally, the obtaining module 61 is used for: obtaining a second list and a third list, where the second list includes a data channel application, configured for a PLMN registered with the terminal, that can be used in the data service off state, and the third list includes all data channel applications that can be used by the terminal; and determining the first list based on the second list and the third list.

Optionally, a 3GPP packet switched data off exempt service configured for the PLMN registered with the terminal includes the second list, or the second list is a list independent of the 3GPP packet switched data off exempt service.

Optionally, each data channel application in the second list is indicated in at least one of the following manners:
an identifier of the data channel application;
a type of the data channel application; and
a purpose of the data channel application.

Optionally, that the obtaining module 61 obtains the second list includes at least one the following:
obtaining the locally stored second list;
obtaining the second list through a device management process;
obtaining the second list through a UICC provisioning process; and
obtaining the second list in an IMS registration process.

Optionally, that the obtaining module 61 obtains the third list includes: obtaining the third list from the first IMS network element.

Optionally, the obtaining module 61 is used for determining the first list based on the second list and the third list when the third list is obtained in the data service off state; or
the obtaining module 61 is used for: if the third list is not obtained in the data service off state, determining the first list based on the second list and the third list after the data service off state is changed to.

Optionally, the information obtaining apparatus 60 further includes:
a deletion module, used for: in the data service off state, if it is determined that a first data channel application is using an application data channel, and the first data channel application is not included in the first list, initiating a procedure of deleting the application data channel corresponding to the first data channel application.

Optionally, the deletion module is used for sending a second request, where the second request indicates to delete the application data channel.

The information obtaining apparatus in this embodiment of this application may be an electronic device, for example, an electronic device having an operating system, or a component in an electronic device, for example, an integrated circuit or a chip. The electronic device may be a terminal, or may be a device other than a terminal. For example, the terminal may include but is not limited to the foregoing listed types of the terminal 11, and the another device may be a server, a network attached storage (Network Attached Storage, NAS), or the like. This is not specifically limited in embodiments of this application.

The information obtaining apparatus provided in this embodiment of this application can implement each process implemented in the method embodiment in FIG. 2, and the same technical effects can be achieved. To avoid repetition, details are not described herein again.

As shown in FIG. 7, an embodiment of this application further provides an information obtaining apparatus 70, including:
a sending module 71, used for sending a first list to a terminal, where the first list includes at least one data channel application, and the at least one data channel application is a data channel application that can be used by the terminal in a data service off state.

In this embodiment of this application, the first list can be determined and sent to the terminal, the first list includes the at least one data channel application, and the at least one data channel application is a data channel application that can be used by the terminal in the data service off state, so that the terminal can optimize use of the data channel application in the data service off state.

Optionally, the sending module 71 is used for: receiving a first request sent by the terminal, where the first request is used to request the first list; and sending the first list to the terminal.

Optionally, the information obtaining apparatus 70 further includes:
an obtaining module, used for obtaining a second list and a third list, where the second list includes a data channel application, configured for a PLMN registered with the terminal, that can be used in the data service off state, and the third list includes all data channel applications that can be used by the terminal; and
a determining module, used for determining the first list based on the second list and the third list.

Optionally, the information obtaining apparatus 70 further includes:
a receiving module, used for receiving a first message sent by a second IMS network element, where the first message includes at least one of the following:
the second list; and
indication information indicating that the terminal is in the data service off state.

Optionally, a 3GPP packet switched data off exempt service configured for the PLMN registered with the terminal includes the second list, or the second list is a list independent of the 3GPP packet switched data off exempt service.

Optionally, each data channel application in the second list is indicated in at least one of the following manners:
an identifier of the data channel application;
a type of the data channel application; and
a purpose of the data channel application.

The information obtaining apparatus in this embodiment of this application may be an electronic device, for example, an electronic device having an operating system, or a component in an electronic device, for example, an integrated circuit or a chip.

The information obtaining apparatus provided in this embodiment of this application can implement each process implemented in the method embodiment in FIG. 3, and the same technical effects can be achieved. To avoid repetition, details are not described herein again.

As shown in FIG. 8, an embodiment of this application further provides an information obtaining apparatus 80, including:
a sending module 81, used for sending a first message to a first IMS network element when determining that a terminal is in a data service off state, where the first message includes at least one of the following:
a second list, where the second list includes a data channel application, configured for a PLMN registered with the terminal, that can be used in the data service off state; and
indication information indicating that the terminal is in the data service off state.

Optionally, the second list is used to determine a first list, the first list includes at least one data channel application, and the at least one data channel application is a data channel application that can be used by the terminal in the data service off state.

Optionally, a 3GPP packet switched data off exempt service configured for the PLMN registered with the terminal includes the second list, or the second list is a list independent of the 3GPP packet switched data off exempt service.

Optionally, each data channel application in the second list is indicated in at least one of the following manners:
an identifier of the data channel application;
a type of the data channel application; and
a purpose of the data channel application.

Optionally, the sending module 81 is used for: in a case of receiving a bootstrap data channel establishment request sent by the terminal and determining that the terminal is in the data service off state, sending the first message to the first IMS network element; or
the sending module 81 is used for sending the first message to the first IMS network element in a case that the terminal changes to the data service off state.

The information obtaining apparatus in this embodiment of this application may be an electronic device, for example, an electronic device having an operating system, or a component in an electronic device, for example, an integrated circuit or a chip.

The information obtaining apparatus provided in this embodiment of this application can implement each process implemented in the method embodiment in FIG. 4, and the same technical effects can be achieved. To avoid repetition, details are not described herein again.

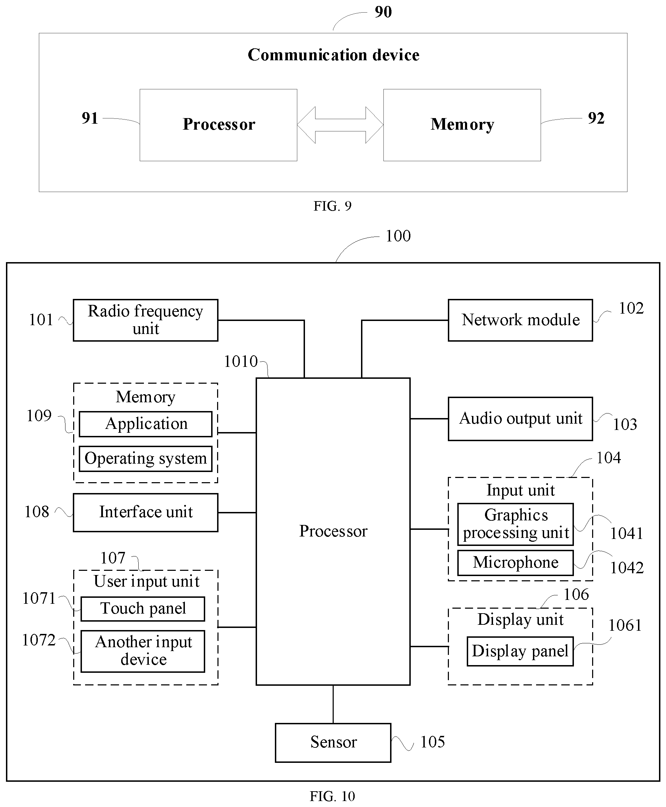

As shown in FIG. 9, an embodiment of this application further provides a communication device 90, including a processor 91 and a memory 92. The memory 92 stores a program or instructions runnable on the processor 91. For example, in a case that the communication device 90 is a terminal, and the program or the instructions are executed by the processor 91, the steps of the information obtaining method embodiments performed by the terminal are implemented, and the same technical effects can be achieved. In a case that the communication device 90 is a first IMS network element, when the program or the instructions are executed by the processor 91, the steps of the information obtaining method embodiments performed by the first IMS network element are implemented, and the same technical effects can be achieved. In a case that the communication device 90 is a second IMS network element, when the program or the instructions are executed by the processor 91, the steps of the information obtaining method embodiments performed by the second IMS network element are implemented, and the same technical effects can be achieved. To avoid repetition, details are not described herein again.

An embodiment of this application further provides a terminal, including a processor and a communication interface. The communication interface is coupled to the processor, and the processor is used for running a program or instructions, to implement the steps in the method embodiment shown in FIG. 2. This terminal embodiment corresponds to the foregoing method embodiments on the terminal side. Each implementation process and implementation of the foregoing method embodiments may be applied to this terminal embodiment, and the same technical effects can be achieved. Specifically, FIG. 10 is a schematic diagram of a hardware structure of a terminal according to an embodiment of this application.

The terminal 100 includes but is not limited to at least some components in a radio frequency unit 101, a network module 102, an audio output unit 103, an input unit 104, a sensor 105, a display unit 106, a user input unit 107, an interface unit 108, a memory 109, and a processor 1010.

A person skilled in the art may understand that the terminal 100 may further include a power supply (for example, a battery) that supplies power to each component. The power supply may be logically connected to the processor 1010 through a power management system, so that functions such as charging management, discharging management, and power consumption management are implemented through the power management system. The terminal structure shown in FIG. 10 does not constitute a limitation on the terminal. The terminal may include more or fewer components than those shown in the figure, or some components may be combined, or different component arrangements may be used. Details are not described herein again.

It should be understood that in this embodiment of this application, the input unit 104 may include a graphics processing unit (Graphics Processing Unit, GPU) 1041 and a microphone 1042, and the graphics processing unit 1041 processes a static picture or video image data obtained by an image capturing apparatus (for example, a camera) in a video capturing mode or an image capturing mode. The display unit 106 may include a display panel 1061, and the display panel 1061 may be configured in a form of a liquid crystal display, an organic light-emitting diode, or the like. The user input unit 107 includes at least one of a touch panel 1071 and another input device 1072. The touch panel 1071 is also referred to as a touchscreen. The touch panel 1071 may include two parts: a touch detection apparatus and a touch controller. The another input device 1072 may include but is not limited to a physical keyboard, a function key (such as a volume control key or a switch key), a track ball, a mouse, and a joystick. Details are not described herein again.

In this embodiment of this application, the radio frequency unit 101 receives downlink data from a network-side device and then transmits the data to the processor 1010 for processing. In addition, the radio frequency unit 101 may send uplink data to the network-side device. Generally, the radio frequency unit 101 includes but is not limited to an antenna, an amplifier, a transceiver, a coupler, a low noise amplifier, a duplexer, and the like.

The memory 109 may be used for storing a software program or instructions and various data. The memory 109 may mainly include a first storage area that stores a program or instructions and a second storage area that stores data, where the first storage area may store an operating system, an application or an instruction required for at least one function (for example, a sound playing function, an image display function, and the like), and the like. In addition, the memory 109 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 109 in this embodiment of this application includes but is not limited to these memories and any other memory of a suitable type.

The processor 1010 may include one or more processing units. Optionally, the processor 1010 integrates an application processor and a modem processor. The application processor mainly processes operations related to an operating system, a user interface, an application, and the like. The modem processor mainly processes wireless communication signals, and is, for example, a baseband processor. It may be understood that the modem processor may not be integrated into the processor 1010.

The processor 1010 is used for obtaining a first list, where the first list includes at least one data channel application, and the at least one data channel application is a data channel application that can be used by the terminal in a data service off state.

In this embodiment of this application, not all data channel applications (DC APP) are processed based on an exempt service. The terminal can determine the first list, the first list includes the at least one data channel application, and the at least one data channel application is a data channel application that can be used by the terminal in the data service off state, so that the terminal can optimize use of the data channel application in the data service off state.

It may be understood that, for an implementation process of each implementation mentioned in this embodiment, refer to the related descriptions in the method embodiments performed by the terminal, and the same or corresponding technical effects are achieved. To avoid repetition, details are not described herein again.

An embodiment of this application further provides a network-side device, including a processor and a communication interface. The communication interface is coupled to the processor, and the processor is used for running a program or instructions, to implement the steps in the method embodiment shown in FIG. 3. This network-side device embodiment corresponds to the method embodiments performed by the first IMS network element. Each implementation process and implementation of the foregoing method embodiments may be applied to this network-side device embodiment, and the same technical effects can be achieved.

An embodiment of this application further provides a network-side device, including a processor and a communication interface. The communication interface is coupled to the processor, and the processor is used for running a program or instructions, to implement the steps in the method embodiment shown in FIG. 4. This network-side device embodiment corresponds to the method embodiments performed by the second IMS network element. Each implementation process and implementation of the foregoing method embodiments may be applied to this network-side device embodiment, and the same technical effects can be achieved.

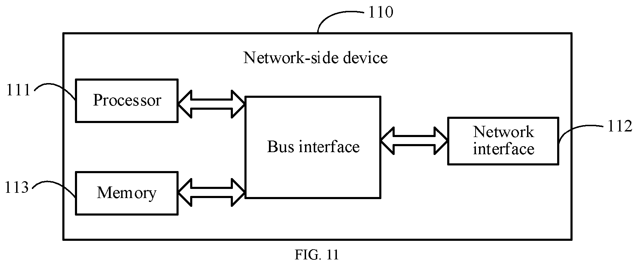

Specifically, an embodiment of this application further provides a network-side device. As shown in FIG. 11, the network-side device 1100 includes a processor 1101, a network interface 1102, and a memory 1103. The network interface 1102 is, for example, a common public radio interface (common public radio interface, CPRI).

Specifically, the network-side device 1100 in this embodiment of this application further includes instructions or programs stored in a memory 1103 and runnable on the processor 1101. The processor 1101 calls the instructions or programs in the memory 1103 to execute the method perform by the modules in FIG. 7 or FIG. 8, and achieves the same technical effects. To avoid repetition, details are not described herein again.

An embodiment of this application further provides a readable storage medium, where the readable storage medium stores a program or instructions. When the program or the instructions are executed by a processor, the processes of the information obtaining method embodiments are implemented, and the same technical effects can be achieved. To avoid repetition, details are not described herein again.

The processor may be a processor of the terminal in the foregoing embodiments. The readable storage medium includes a computer-readable storage medium, for example, a computer read-only memory ROM, a random access memory RAM, a magnetic disk, or an optical disk. In some examples, the readable storage medium may be a non-transitory readable storage medium.

An embodiment of the present application further provides a chip. The chip includes a processor and a communication interface. The communication interface is coupled to the processor. The processor is used for running a program or instructions, to implement the processes of the information obtaining method embodiments, and the same technical effects can be achieved. To avoid repetition, details are not described herein again.

It should be understood that the chip mentioned in this embodiment of this application may alternatively be referred to as a system on chip, a system chip, a chip system, a system on a chip, or the like.

An embodiment of this application further provides a computer program/program product. The computer program/program product is stored in a storage medium, and the computer program/program product is executed by at least one processor, to implement the processes of the information obtaining method embodiments, and the same technical effects can be achieved. To avoid repetition, details are not described herein again.

An embodiment of this application further provides a communication system, including a terminal, a first IMS network element, and a second IMS network element, where the terminal may be used for performing the steps of the information obtaining method performed by the terminal described above, the first IMS network element may be used for performing the steps of the information obtaining method performed by the first IMS network element described above, and the second IMS network element may be used for performing the steps of the information obtaining method performed by the second IMS network element described above.

It is worthwhile to note that, in this specification, the terms "include", "comprise", or any other variants thereof are intended to cover a non-exclusive inclusion, so that a process, a method, a thing, or an apparatus that includes a list of elements not only includes those elements but also includes other elements which are not expressly listed, or further includes elements inherent to such a process, method, thing, or apparatus. An element limited by a phrase "includes a..." does not, without more limitations, preclude existence of an additional identical element in a process, method, object, or apparatus that includes the element. Moreover, it should be noted that the scope of the method and apparatus of embodiments of this application is not limited to performing functions in the order shown or discussed, but may further include performing functions in a substantially concurrent manner or in reverse order depending on the related function. For example, the described method may be performed in an order different from that described, and various steps may be further added, omitted, or combined. Moreover, features described with reference to some examples may be combined in other examples.

According to the descriptions in the foregoing implementations, a person skilled in the art may clearly learn that the method according to the foregoing embodiments may be implemented by a computer software product and a necessary general hardware platform, or certainly, by using hardware. The computer software product is stored in a storage medium (such as an ROM, an RAM, a magnetic disk, or an optical disc) and includes several instructions for instructing a terminal or a network-side device to perform the methods described in embodiments of this application.

The foregoing describes embodiments of this application with reference to the accompanying drawings. However, this application is not limited to the foregoing specific implementations. The foregoing specific implementations are merely examples, but are not limitative. Inspired by this application, persons of ordinary skill in the art may further make implementations in many forms without departing from the purposes of this application and the protection scope of the claims, and all the implementations shall fall within the protection of this application.

## Claims

1. An information obtaining method, comprising:
obtaining, by a terminal, a first list, wherein the first list comprises at least one data channel application, and the at least one data channel application is a data channel application that can be used by the terminal in a data service off state.

2. The method according to claim 1, wherein the obtaining, by a terminal, a first list comprises:
receiving, by the terminal, the first list sent by a first internet protocol multimedia subsystem IMS network element.

3. The method according to claim 2, where the receiving, by the terminal, the first list sent by a first IMS network element comprises:
sending, by the terminal, a first request to the first IMS network element, wherein the first request is used to request the first list.

4. The method according to claim 3, where the sending, by the terminal, a first request to the first IMS network element comprises:
sending, by the terminal, the first request to the first IMS network element in the data service off state; or
sending, by the terminal, the first request to the first IMS network element in a case that the terminal changes to the data service off state.

5. The method according to claim 3 or 4, wherein the first request is a hypertext transfer protocol get request (HTTP GET Request).

6. The method according to claim 1, wherein the obtaining, by a terminal, a first list comprises:
obtaining, by the terminal, a second list and a third list, wherein the second list comprises a data channel application, configured for a public land mobile network PLMN registered with the terminal, that can be used in the data service off state, and the third list comprises all data channel applications that can be used by the terminal; and
determining, by the terminal, the first list based on the second list and the third list.

7. The method according to claim 6, wherein a 3rd generation partnership project (3GPP) packet switched data off exempt service configured for the PLMN registered with the terminal comprises the second list, or the second list is a list independent of the 3GPP packet switched data off exempt service.

8. The method according to claim 6 or 7, wherein each data channel application in the second list is indicated in at least one of the following manners:
an identifier of the data channel application;
a type of the data channel application; and
a purpose of the data channel application.

9. The method according to claim 5, wherein the obtaining, by the terminal, a second list comprises at least one of the following:
obtaining, by the terminal, the locally stored second list;
obtaining, by the terminal, the second list through a device management process;
obtaining, by the terminal, the second list through a universal integrated circuit card UICC provisioning process; and
obtaining, by the terminal, the second list in an IMS registration process.

10. The method according to claim 6, wherein the obtaining, by the terminal, a third list comprises:
obtaining, by the terminal, the third list from the first IMS network element.

11. The method according to claim 6 or 9, wherein the determining, by the terminal, the first list based on the second list and the third list comprises:
if the terminal is in the data service off state when obtaining the third list, determining, by the terminal, the first list based on the second list and the third list; or
if the terminal is not in the data service off state when obtaining the third list, determining, by the terminal, the first list based on the second list and the third list after being changed to the data service off state.

12. The method according to any one of claims 1 to 11, further comprising:
in the case that the terminal is in the data service off state, if it is determined that a first data channel application is using an application data channel, and the first data channel application is not comprised in the first list, initiating, by the terminal, a procedure of deleting the application data channel corresponding to the first data channel application.

13. The method according to claim 12, where the initiating, by the terminal, a procedure of deleting the application data channel corresponding to the first data channel application comprises:
sending, by the terminal, a second request, wherein the second request indicates to delete the application data channel.

14. The method according to claim 13, wherein the second request is a re-invite (re-Invite) message.

15. An information obtaining method, comprising:
sending, by a first IMS network element, a first list to a terminal, wherein the first list comprises at least one data channel application, and the at least one data channel application is a data channel application that can be used by the terminal in a data service off state.

16. The method according to claim 15, where the sending, by a first IMS network element, a first list to a terminal comprises:
receiving, by the first IMS network element, a first request sent by the terminal, wherein the first request is used to request the first list; and
sending, by the first IMS network element, the first list to the terminal.

17. The method according to claim 16, where the first request is an HTTP GET Request.

18. The method according to any one of claims 15 to 17, further comprising:
obtaining, by the first IMS network element, a second list and a third list, wherein the second list comprises a data channel application, configured for a PLMN registered with the terminal, that can be used in the data service off state, and the third list comprises all data channel applications that can be used by the terminal; and
determining, by the first IMS network element, the first list based on the second list and the third list.

19. The method according to claim 18, further comprising:
receiving, by the first IMS network element, a first message sent by a second IMS network element, wherein the first message comprises at least one of the following:
the second list; and
indication information indicating that the terminal is in the data service off state.

20. The method according to claim 18 or 19, wherein a 3GPP packet switched data off exempt service configured for the PLMN registered with the terminal comprises the second list, or the second list is a list independent of the 3GPP packet switched data off exempt service.

21. The method according to claim 18, 19, or 20, wherein each data channel application in the second list is indicated in at least one of the following manners:
an identifier of the data channel application;
a type of the data channel application; and
a purpose of the data channel application.

22. An information obtaining method, comprising:
sending, by a second IMS network element, a first message to a first IMS network element when determining that a terminal is in a data service off state, wherein the first message comprises at least one of the following:
a second list, wherein the second list comprises a data channel application, configured for a PLMN registered with the terminal, that can be used in the data service off state; and
indication information indicating that the terminal is in the data service off state.

23. The method according to claim 22, wherein the second list is used to determine a first list, the first list comprises at least one data channel application, and the at least one data channel application is a data channel application that can be used by the terminal in the data service off state.

24. The method according to claim 22 or 23, wherein a 3GPP packet switched data off exempt service configured for the PLMN registered with the terminal comprises the second list, or the second list is a list independent of the 3GPP packet switched data off exempt service.

25. The method according to any one of claims 22 to 24, wherein each data channel application in the second list is indicated in at least one of the following manners:
an identifier of the data channel application;
a type of the data channel application; and
a purpose of the data channel application.

26. The method according to claim 22, wherein the sending, by a second IMS network element, a first message to a first IMS network element when determining that a terminal is in a data service off state comprises:
in a case of receiving a bootstrap data channel establishment request sent by the terminal and determining that the terminal is in the data service off state, sending, by the second IMS network element, the first message to the first IMS network element; or
sending, by the second IMS network element, the first message to the first IMS network element in a case that the terminal changes to the data service off state.

27. An information obtaining apparatus, comprising:
an obtaining module, used for obtaining a first list, wherein the first list comprises at least one data channel application, and the at least one data channel application is a data channel application that can be used by a terminal in a data service off state.

28. An information obtaining apparatus, comprising:
a sending module, used for sending a first list to a terminal, wherein the first list comprises at least one data channel application, and the at least one data channel application is a data channel application that can be used by the terminal in a data service off state.

29. An information obtaining apparatus, comprising:
a sending module, used for sending a first message to a first IMS network element when determining that a terminal is in a data service off state, wherein the first message comprises at least one of the following:
a second list, wherein the second list comprises a data channel application, configured for a PLMN registered with the terminal, that can be used in the data service off state; and
indication information indicating that the terminal is in the data service off state.

30. A terminal, comprising a processor and a memory, wherein the memory stores a program or instructions runnable on the processor, and when the program or the instructions are executed by the processor, steps of the information obtaining method according to any one of claims 1 to 14 are implemented.

31. A network-side device, comprising a processor and a memory, wherein the memory stores a program or instructions runnable on the processor, and when the program or the instructions are executed by the processor, steps of the information obtaining method according to any one of claims 15 to 21 are implemented, or when the program or the instructions are executed by the processor, steps of the information obtaining method according to any one of claims 22 to 26 are implemented.

32. A readable storage medium, wherein the readable storage medium stores a program or instructions, and when the program or the instructions are executed by a processor, steps of the information obtaining method according to any one of claims 1 to 14, or the information obtaining method according to any one of claims 15 to 21, or the information obtaining method according to any one of claims 22 to 26 are implemented.
